# EUROPEAN PATENT SPECIFICATION

(11) **EP 1 286 540 B1**
(45) Date of publication and mention of the grant of the patent: **29.06.2005**
(21) Application number: 01402203.2
(22) Date of filing: 22.08.2001
(51) Int. Cl.: H04N 5/44, H04N 7/16, H04N 5/00, H04N 5/445, H04N 7/50

(54) **Consumer electronics appliances with shared memory**
Geräte der Unterhaltungselektronik mit gemeinsamen Speicher
Appareils électroniques grand public utilisants une mémoire partagée

(43) Date of publication of application: 26.02.2003
(73) Proprietor: Thomson Licensing S.A., 92648 Boulogne Cedex (FR)
(72) Inventor: Fani, Eric, 239097 Singapore (SG)
(74) Representative: Arnold, Klaus-Peter, Dr.

(56) References cited:
- WO-A-98/14003
- US-B1- 6 208 350
- MALCHER D ET AL: "TV-MULTIMEDIA-PC ARBEITEN, INFORMIEREN UND UNTERHALTEN OHNE GRENZEN" FERNSEH UND KINOTECHNIK, VDE VERLAG GMBH. BERLIN, DE, vol. 50, no. 3, 1 March 1996 (1996-03-01), pages 104-109, XP000581419 ISSN: 0015-0142
- BACH U ET AL: "MULTIMEDIALES TV-GEREAT" RADIO FERNSEHEN ELEKTRONIK, VEB VERLAG TECHNIK. BERLIN, DE, vol. 45, no. 9, 1 August 1996 (1996-08-01), pages 28,30-31, XP000636538 ISSN: 1436-1574

## Description

The invention relates to an apparatus with two consumer electronics appliances, integrated in one housing, in particular a television set with an integrated DVD player.

With falling prices for microcomputers and digital memory circuits and with increasing processor power, more and more consumer electronics appliances use digital technology, or new products are brought to the market, which are based essentially on digital technology. Also, more and more analog circuits are replaced by digital circuitry.

It is known to combine consumer electronics appliances in one housing, to provide a more convenient use and for cost considerations, for example television sets, in which a video recorder or a DVD player is integrated, or audio systems which comprise amplifier, tuner, CD player and/or cassette recorder in one housing.

In Malcher et al: "TV Multimedia-PC Arbeiten, Informieren und Unterhalten ohne Grenzen", Fernseh und Kinotechnik, VDE Verlag GbmH, Berlin, DE, Vol. 50, No. 3, 1 March 1996, pages 104-109, XP000581419, a TV-Multimedia-PC is described, which comprises a sound-card and a CD-Rom drive, which are usable for sound playback and video playback applications. The TV-Multimedia-PC comprises further shared resources, for example a system memory or a hard disc drive for respective operations.

In US-B-6208350 an apparatus for processing a DVD-Video is disclosed. The apparatus comprises an MPEG-2 Video decoder integrated in a computer system for the playback of a DVD data stream, for providing a Multimedia PC.

It is the object of the present invention, to provide an apparatus with two consumer electronics appliances integrated in one housing, which have a more efficient use of digital components.

This object is achieved by means of the features of the invention as specified in claim 1. Advantageous developments of the invention are specified in the subclaims.

The apparatus with two consumer electronics appliances integrated in one housing comprises according to the invention a memory, which is used by both appliances. The apparatus is a television set with an integrated DVD player. Because the DVD player needs a considerable amount of RAM memory for processing digital data according to the MPEG-2 standard, this memory can be used by the television set, when the DVD player is not operating. In particular, this memory is used by the television set for teletext or electronic program guide operation.

By allowing the resident memory to be accessed by other peripherals, when the DVD functions are not used, low-cost features may be integrated in the apparatus with little or no memory investment. The scheme works as a memory booster and with a connection of the apparatus to a telephone line for interactivity, the perspectives of usage are multiple.

In a further embodiment, the shared memory is used for additional video applications, for example for a new repeat feature of the TV video signal, or "freeze and print" of a picture to a peripheral, or for example for transferring of digital still camera or digital video pictures to the memory and later thereon for displaying on the screen with a use of a Codec. Also, a picture improvement scheme may make use of the memory as a transient location for data processing. Another possibility would be to download pictures or a screen saver via telephone line into this memory, and perspectives are there to have a videophone using this scheme.

In another preferred embodiment, the apparatus comprises a connection to a telephone line and the shared memory is used for digital voice recorder applications, allowing users to be reminded of an event of their own way, or is used as a digital answering machine. The shared memory in this case may be used also for "repeat/record features", or for karaoke applications comprising echo or chorus features, via which a memory sequence can be repeated in the background.

The apparatus comprises advantageously a power management with regard to the shared memory, to ensure that the application is switching-off the unused part of the respective appliance, when making use of the memory. The DVD processor does not need to be powered up, when the memory is being used by another peripheral, which diminishes the power consumption of the assembly strictly to the necessary.

The invention is now explained in more detail with reference to schematic drawings, showing preferred embodiments:
- Fig. 1: A television set with an integrated DVD player, using a shared memory for DVD operation and for videotext operation;
- Fig. 2: the television set according to Fig. 1, interacting with a handset/remote control unit; and
- Fig. 3: a television set with an integrated DVD player, comprising a shared memory, which is used for audio applications.

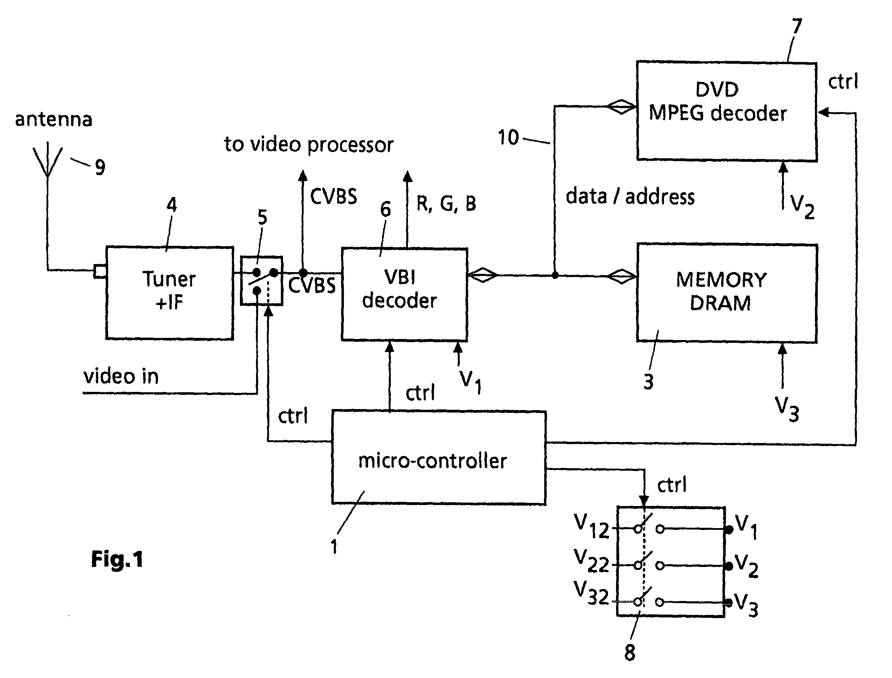

In Fig.1 an apparatus with two consumer electronics appliances, a television set with a DVD player integrated in one housing, is shown with the essential elements for understanding the invention. The television set comprises a tuner and intermediate frequency (IF) amplifier circuit 4 for downconverting the television input signal from the antenna 9 to the base band. Following this circuit, an input selector 5 is arranged for selecting between the antenna signal 9 and an input signal from a video recorder (video-in).

The respective base band input signal CVBS (Color Vertical Blanking Synchronization) is then routed to the video processor for video processing and displaying on a picture tube (not shown), and also is routed to a VBI decoder 6, for teletext and program guide processing. In analog television systems, as PAL, NTSC or SECAM, during the vertical flyback phase no video signal is transmitted, and this time interval, the so called vertical blanking interval (VBI), is used for the transmission of digital data, for example teletext. This information is extracted by the VBI decoder 6 and forwarded to the video processor in form of RGB signals. The apparatus comprises further a DVD player, of which in Fig. 1 is shown only the DVD-MPEG-2 decoder 7 and the memory 3 (DRAM). The input switch 5, the VBI decoder 6 and the MPEG decoder 7 are controlled by a micro-controller 1.

According to the invention, the memory 3 is used by the MPEG decoder 7 as well as by the VBI decoder 6 via a common data/address line 10. The data/ address line 10 can have a parallel bus structure, or can be arranged as a serial bus, as known from prior art. Because in the apparatus either the DVD player is used for viewing a video, or the VBI decoder 6 is used for viewing teletext or program guide information, the memory 3 can be used advantageously for both applications without any access conflict. For teletext operation for example, upon a request from a user, the micro-controller 1 requests the VBI decoder 6 to fetch the relevant data from the memory 3 and shape it in the VBI decoder 6 under the form of an RGB signal for displaying via the video processor.

The apparatus comprises further a special power management for the respective operating mode. Therefore, the micro-controller 1 is coupled to a switching matrix 8, for providing operating voltages V1, V2 and V3 selectively to the VBI decoder 6, the DVD-MPEG decoder 7 and to the memory 3. For the teletext and program guide operation, the micro-controller 1 ensures availability of operating voltages V1 and V3, and for DVD operation, the micro-controller 1 provides the voltages V2 and V3, and switches off the VBI decoder 6.

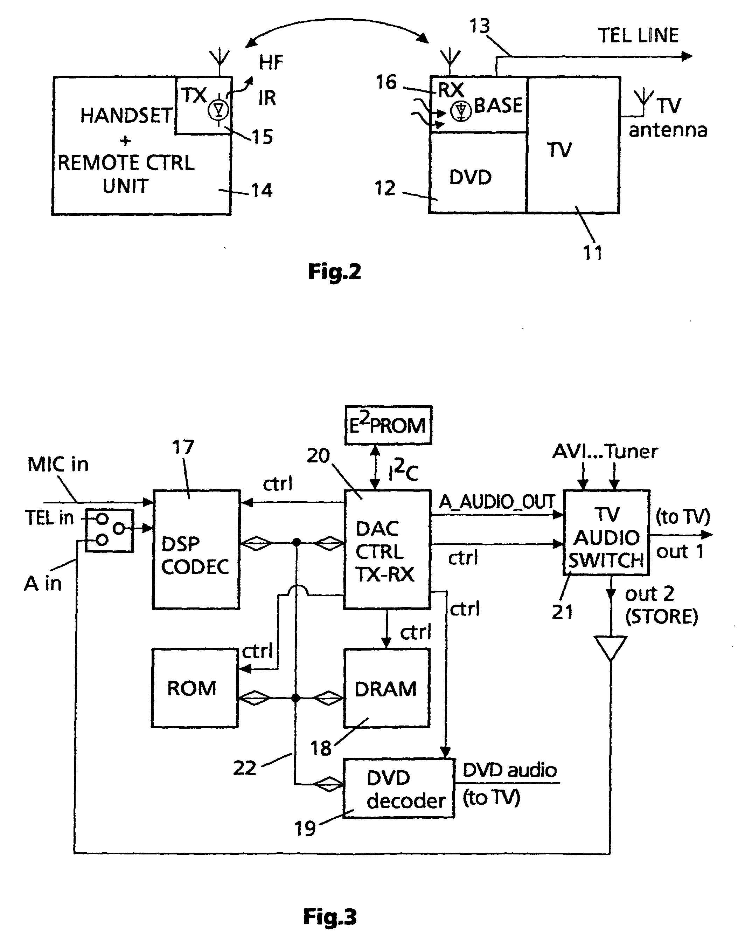

In Fig. 2 an apparatus is shown schematically with two consumer electronics appliances, a television set 11 and a DVD player 12. The apparatus comprises further a base station 16, which is coupled with a telephone line 13, and which is interacting with a handset and remote control unit 14, via which a user controls the apparatus. The unit 14 comprises a communication port 15 for communicating with the base station 16, providing a HF transmission in both directions and an infrared transmission from the unit 14 to the base station 16. Via the HF transmission a user is able to use the unit 14 as a cordless handset for making telephone calls via the telephone line 13, and via the infrared channel 15 the user controls the television set and the DVD player, as known.

In Fig. 3 the architecture of the essential elements of the apparatus according to Fig. 2 are shown. In this embodiment, the apparatus processes several audio signals, a microphone input signal MICin, a telephone-line input signal TELin and an audio source Ain from the television set, which is provided via a TV-audio-switch 21, for example from the tuner or a video recorder (AV1).

Upon selection of an audio source by a user, the apparatus provides an analog/digital conversion in a DSP coding circuit 17, which provides also signal processing for routing of the data to a memory 18. The memory 18 is a shared DRAM memory, which is used also by the DVD decoder 19 of the DVD player 12, which is integrated in the television set, see Fig. 2.

Upon request, the apparatus will fetch the data from the memory 18 and convert the data to an analog signal in a DAC and control unit 20, for providing an analog audio signal A_audio_out to the TV audio switch 21. To the TV audio switch 21 the audio signals from the tuner and from AV1, AV2 and/or AV3 are coupled, and the switch 21 comprises an output out1 going to the television set for a reproduction of the audio signals via the loudspeakers of the television set, and an output out2, for storing an audio signal in the memory 18. The DRAM memory 18 is used via a common data/address line 22 by the DSP coding circuit 17 and the DAC and control unit 20 as well as by the DVD decoder 19.

Via the circuits 17 and 20 therefore the real time audio data, as applied to the DSP circuit 17, as well as the stored audio data from the memory 18 can be forwarded to the TV audio switch 21. The memory 18 may be used therefore as a digital voice recorder for a digital answering system, or for special audio effects with regard to the microphone input MICin, as described in the first part of the description. As a microphone advantageously the handset and remote control unit as shown in Fig. 2 can be used.

Further embodiments of the invention are obvious for a person skilled in the art. Especially, instead of a DVD player, other appliances, for example digital video recorders according to the D-VHS standard or other recorders based on optical media may be used. The embodiment with regard to Fig. 3 may be used also in an integrated stereo system instead of a television set. In the figures, the blocks are used only to illustrate the invention, but they do not necessarily relate to any integrated circuits. Several blocks might be integrated within one circuit or one block may comprise several integrated circuits.

## Claims

1. Apparatus with two consumer electronics appliances, integrated in one housing, with the features
the first appliance is a television set and the second appliance an integrated DVD player,
the apparatus comprises a memory (3, 18), which is used by the television set for processing teletext or electronic program guide data and is used by the DVD player for decoding MPEG-2 data, and
the apparatus comprises a common data/address line (10) for coupling the memory (3) with a VBI decoder (6) of the television set and with a MPEG-2 decoder (7, 19) of a DVD player.

2. Apparatus according to claim 1, **characterized in that** the apparatus comprises a power management via a micro-controller (1) for switching off the MPEG-2 decoder (7, 19) during the teletext/ electronic program guide operating mode, and for switching off the VBI decoder (6) during DVD player operation.

3. Apparatus according to claim 1, **characterized in that** the apparatus is coupled to a telephone line (TEL Line), and that the memory (18) is used for digital voice recorder applications.

4. Apparatus according to claim 3, **characterized in that** the apparatus comprises a common data/address line (22), via which the memory (18) is used by a DSP coding circuit (17), a DAC and control unit (20) and the MPEG-2 decoder (7, 19).

5. Apparatus according to one of the preceding claims, **characterized in that** the memory (3, 18) is used for video applications in form of "freeze and print" of a picture to a peripheral apparatus, or for storing and displaying of digital still camera pictures or digital video pictures.

## Patentansprüche

1. Vorrichtung mit zwei in einem Gehäuse integrierten Verbraucherelektronikgeräten, mit den folgenden Merkmalen:
das erste Gerät ist ein Fernsehapparat und das zweite Gerät ein integrierter DVD-Spieler,
die Vorrichtung umfaßt einen Speicher (3, 18), der von dem Fernsehapparat zum Verarbeiten von Videotext- oder elektronischen Programmanleitungsdaten und von dem DVD-Spieler zum Decodieren von MPEG-2-Daten verwendet wird, und
die Vorrichtung umfaßt eine gemeinsame Daten-/Adressenleitung (10) zum Koppeln des Speichers (3) mit einem VBI-Decoder (6) des Fernsehapparats und mit einem MPEG-2-Decoder (7, 19) eines DVD-Spielers.

2. Vorrichtung nach Anspruch 1, **dadurch gekennzeichnet, daß** die Vorrichtung über eine Mikrosteuerung (1) ein Energiesparmanagement zum Ausschalten des MPEG-2-Decoders (7, 19) während des Videotext-/elektronischen Programmanleitungsbetriebsmodus und zum Ausschalten des VBI-Decoders (6) während des DVD-Spielerbetriebs umfaßt.

3. Vorrichtung nach Anspruch 1, **dadurch gekennzeichnet, daß** die Vorrichtung an eine Telefonleitung (TEL Line) angekoppelt ist und daß der Speicher (18) für digitale Sprachrecorderanwendungen verwendet wird.

4. Vorrichtung nach Anspruch 3, **dadurch gekennzeichnet, daß** die Vorrichtung eine gemeinsame Daten-/Adressenleitung (22) umfaßt, über die der Speicher (18) von einer DSP-Codierungsschaltung (17), einer DAC- und Steuereinheit (20) und dem MPEG-2-Decoder (7, 19) benutzt wird.

5. Vorrichtung nach einem der vorhergehenden Ansprüche, **dadurch gekennzeichnet, daß** der Speicher (3, 18) für Videoanwendungen in Form von "Einfrieren und Drucken" eines Bildes zu einer peripheren Vorrichtung oder zum Speichern und Anzeigen von digitalen Standbildkamerabildern oder digitalen Videobildern verwendet wird.

## Revendications

1. Appareil contenant deux fonctions électroniques grand public intégrées dans un même boîtier, avec les caractéristiques suivantes :
la première fonction est un téléviseur et la deuxième fonction est un lecteur de disques DVD intégré,
l'appareil comporte une mémoire (3, 18) qui est utilisée par le téléviseur pour traiter du télétexte ou des données de guide de programmes électronique et est utilisée par le lecteur de disques DVD pour décoder des données MPEG-2, et
l'appareil comporte une ligne commune données/adresses (10) pour relier la mémoire (3) au décodeur VBI (6) du téléviseur et avec un décodeur MPEG-2 (7, 19) d'un lecteur de disques DVD.

2. Appareil selon la revendication 1, **caractérisé en ce que** l'appareil comprend un gestionnaire de puissance par l'intermédiaire d'un microcontrôleur (1) pour mettre hors tension le décodeur MPEG-2 (7, 19) pendant le mode de fonctionnement du télétexte et du guide de programmes électronique, et pour mettre hors tension le décodeur VBI (6) pendant le fonctionnement du lecteur de disques DVD.

3. Appareil selon la revendication 1, **caractérisé** ne ce que l'appareil est relié à une ligne téléphonique (Ligne TEL), et que la mémoire (18) est utilisée pour des applications d'enregistrement de voix numérique.

4. Appareil selon la revendication 3, **caractérisé en ce que** l'appareil comporte une line données/adresses (22) par l'intermédiaire de laquelle la mémoire (18) est utilisée par un circuit de codage DSP (17), une unité de conversion CNA et de commande (20) et le décodeur MPEG-2 (7, 19).

5. Appareil selon l'une des revendications précédentes, **caractérisé en ce que** la mémoire (3, 18) est utilisée pour des applications vidéo sous forme « figer et imprimer » d'une image envoyée à un appareil périphérique, ou pour enregistrer et visualiser de images de caméra numérique fixe ou des images vidéo numériques.
